(19) Europäisches Patentamt / European Patent Office / Office européen des brevets

(11) **EP 3 024 011 B1**

(12) **FASCICULE DE BREVET EUROPEEN**

(45) Date de publication et mention
de la délivrance du brevet:
**21.03.2018 Bulletin 2018/12**

(51) Int Cl.:
**H01J 31/50** *(2006.01)*     **H04N 5/357** *(2011.01)*

(21) Numéro de dépôt: **15195467.4**

(22) Date de dépôt: **19.11.2015**

(54) **SYSTEME DE CAPTATION D'IMAGES A BAS NIVEAU DE LUMIERE COMPRENANT UNE OPTIQUE COMPORTANT UN FILTRE DE PHASE ET/OU D'AMPLITUDE**

SYSTEM ZUR BILDERFASSUNG BEI GERINGER LICHTSTÄRKE, DAS EIN OPTIKSYSTEM MIT EINEM PHASEN- UND/ODER AMPLITUDENFILTER UMFASST

SYSTEM FOR COLLECTING LOW-LIGHT IMAGES COMPRISING A LENS HAVING A PHASE AND/OR AMPLITUDE FILTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.11.2014 FR 1402623**

(43) Date de publication de la demande:
**25.05.2016 Bulletin 2016/21**

(73) Titulaire: **THALES**
**92400 Courbevoie (FR)**

(72) Inventeur: **ROLLIN, Joël**
**42580 L'ETRAT (FR)**

(74) Mandataire: **Bréda, Jean-Marc et al**
**Marks & Clerk France**
**Conseils en Propriété Industrielle**
**Immeuble " Visium "**
**22 Avenue Aristide Briand**
**94117 Arcueil Cedex (FR)**

(56) Documents cités:
**FR-A1- 2 973 892**

• **John P. Godbaz ET AL: "Extending AMCW Lidar Depth-of-Field Using a Coded Aperture" In: "LECTURE NOTES IN COMPUTER SCIENCE", 1 janvier 2011 (2011-01-01), Springer Berlin Heidelberg, Berlin, Heidelberg, XP055206026, ISSN: 0302-9743 ISBN: 978-3-54-045234-8 vol. 6495, pages 397-409, DOI: 10.1007/978-3-642-19282-1_32, * le document en entier ***
• **TERENCE L. HARAN ET AL: "<title>Improved night vision demonstrator program status</title>", PROCEEDINGS OF SPIE, vol. 6538, 27 avril 2007 (2007-04-27), page 653821, XP055206715, ISSN: 0277-786X, DOI: 10.1117/12.720971**
• **Frédéric Diaz: "Systeme d'imagerie hybride par codage de pupille", , 6 mai 2011 (2011-05-06), XP055213287, Extrait de l'Internet: URL:http://tel.archives-ouvertes.fr/tel-00 624387/en/ [extrait le 2015-09-15]**
• **TOBIN K W ET AL: "THREE-DIMENSIONAL INFORMATION FROM REAL-TIME ENCODED IMAGES", OPTICAL ENGINEERING, SOC. OF PHOTO-OPTICAL INSTRUMENTATION ENGINEERS, BELLINGHAM, vol. 29, no. 1, 1 janvier 1990 (1990-01-01), pages 52-57, XP000085693, ISSN: 0091-3286**

**Description**

Le domaine de l'invention est celui des systèmes de captation d'images numériques à bas niveau de lumière. Les images ainsi obtenues ont de multiples applications liées à la nécessité de voir de nuit dans un certain nombre de domaines techniques ou industriels liés à la sécurité et à la protection.

Il existe différents moyens pour capter une image de faible ou de très faible luminance. Un grand nombre d'équipements utilisent des tubes à intensificateurs de lumière. Le principe de fonctionnement d'un tube à intensificateur consiste à former une image à bas niveau de lumière sur la surface d'une photocathode. Celle-ci émet des électrons proportionnellement aux photons reçus. On amplifie ces électrons au moyen d'une galette de micro-canaux et d'une haute tension. A la sortie de l'amplification, les électrons sont reçus par un écran phosphorescent qui donne une image amplifiée de l'image initiale. Les tubes à intensificateur actuels sont très performants. A titre d'exemple, les résolutions des images amplifiées atteignent, sur une surface de sortie de 18 mm de diamètre, typiquement de 64 à 72 pl/mm, pl/mm signifiant paire de lignes par millimètre, soit l'équivalent de 2300 à 2500 points par ligne. Leur sensibilité permet la captation d'images en temps réel par nuit dite de niveau 5, quand l'optique frontale est suffisamment ouverte, c'est-à-dire avec un éclairement typique de scène compris entre 0.1 mlux et 0.7 mlux, ce qui correspond à une nuit sans lune. Certains de ces systèmes possèdent, de plus, un contrôle automatique de gain, intégrant également une fonction « auto-gaging » qui permet d'adapter l'amplification du tube intensificateur lorsque les conditions d'éclairement changent, notamment quand des sources intenses sont présentes dans le champ. On peut ainsi travailler jusqu'à des niveaux d'éclairement de l'ordre de 1000 lux.

L'inconvénient majeur des tubes à intensificateurs est que l'image amplifiée reste analogique et ne peut donc être utilisée directement par les systèmes numériques de traitement, de stockage et de transmission d'images. Pour résoudre ce problème, une solution technique possible consiste à coupler l'écran phosphorescent du tube intensificateur avec un capteur numérique classique qui peut être un capteur de type CCD ou CMOS. On combine ainsi les avantages du tube intensificateur avec ceux d'un capteur d'images numériques. Le couplage optique entre le tube et son capteur associé n'est toutefois pas un problème simple. En effet, ce couplage optique ne doit pas dégrader la qualité de l'image donnée par le tube intensificateur et doit avoir une transmission suffisante pour que l'éclairement du capteur reste compatible de son rapport signal/bruit.

Ce couplage peut se faire au moyen d'un transport d'images par un faisceau de fibres optiques. Les brevets CA 2 157 755 intitulé « Camera System for Imaging at Low Light Levels » et GB 2 317 772 intitulé « Automatic exposure and gain control for a sensor using video feedback » exposent des solutions de ce type.

Le couplage peut également être assuré par un transport optique réfractif ou catadioptrique qui ne présente pas les limitations structurelles précédentes des transports par fibres optiques. En effet, il est toujours possible d'obtenir la résolution souhaitée et d'optimiser la transmission du système par des traitements réfléchissants dans le cas d'un transport catoptrique ou antireflets dans le cas d'un transport réfractif, lesdits traitements étant adaptés aux longueurs d'onde d'émission de l'écran phosphorescent. Les demandes de brevet et brevets de références FR 2 858 050 intitulé « Lunette de tir de vision nocturne à deux oculaires », US 2002/0030163 intitulé « Image intensifier and LWIR fusion/combination system », WO95/06388 intitulé « Life extender and bright light protection for CCTV camera system with image intensifier », US 2005/0162526 intitulé « Night-vision light-intensifier/camera structure and methodology » et US 6 326 604 intitulé « Optical intensification system, including an image intensifier for viewing an input source through a lens as a virtual image or as a real image » décrivent des solutions de ce type.

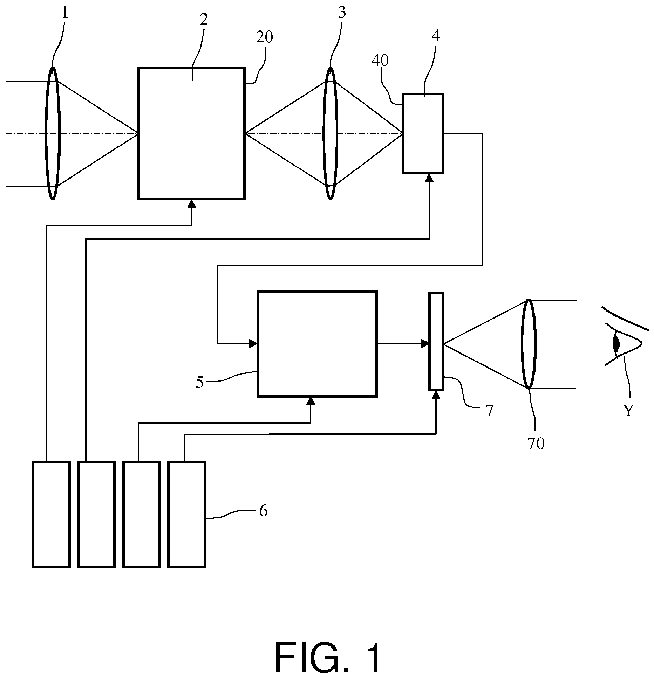

A titre d'exemple, la figure 1 représente le synoptique général d'un système de captation d'images à bas niveau de lumière. Dans cet exemple, le couplage optique est assuré par une optique dioptrique. Sur cette figure et sur les suivantes, les conventions suivantes ont été adoptées. Les différents composants du système de captation d'images figurent en traits gras. Les rayons lumineux figurent en traits fins continus. Les liaisons électriques ou numériques sont représentées par des flèches. Tous les éléments de la chaîne d'imagerie sont sélectionnés pour offrir une réponse temps réel. Par exemple, le tube intensificateur peut comporter un phosphore de type P46 dont la durée de rémanence est courte.

Le système de captation d'images à bas niveau de lumière comprend :

- un objectif de focalisation 1 dont la fonction est de former l'image d'un paysage extérieur sur la photocathode d'un tube intensificateur 2 ;
- ledit tube intensificateur 2 comportant ladite photocathode, des moyens d'amplification et un écran phosphorescent 20 ;
- une optique de couplage 3 disposée entre ledit écran phosphorescent 20 et un capteur photosensible 4 de façon que l'image de l'écran 20 donnée par cette optique de couplage se forme sur la matrice de pixels 40 de ce capteur photosensible 4 ;
- ledit capteur matriciel 4 photosensible aux bas niveaux de lumière qui donne de l'image reçue par la matrice de pixels 40 une image numérique. Il est généralement du type CCD ou CMOS;

- une ou des unités 5 de traitement desdites images numériques fournissant des images traitées ;
- un écran de visualisation 7 qui peut être regardé directement par un utilisateur Y dans le cas d'un moniteur ou, comme on le voit sur la figure 1, au travers d'un oculaire 70 ;
- des alimentations électriques 6 nécessaires au tube intensificateur 2, au capteur matriciel 4, aux unités de traitement 5 et à l'écran de visualisation 7 complètent le système de captation d'images.

Comme on le voit sur cette figure 1, le système comporte différents éléments optiques ou optoélectroniques qui, combinés entre eux, dégradent les images numériques à traiter. Par ailleurs, l'image numérique est nécessairement bruitée si l'on travaille à très bas niveau de lumière. Enfin, par nature, l'objectif a une ouverture importante de façon à capter le plus grand flux lumineux possible. Par conséquent, sa profondeur de champ est limitée et les images à courte distance apparaissent floues quand l'objectif est réglé sur l'infini. Enfin, cet objectif a un champ important pour les applications de conduite ou celles du fantassin visant à renforcer sa mobilité par vision de nuit. Il s'agit de se rapprocher de la vision naturelle qui est grand champ. La réalisation d'une optique compacte à grande ouverture et grand champ ayant une très bonne qualité d'image n'est pas nécessairement simple à réaliser.

Une technique connue pour résoudre ou diminuer ces différents problèmes techniques est d'utiliser des filtres optiques de phase. Cependant, ces filtres sont mis en oeuvre uniquement dans des systèmes simples d'imagerie : focalisation directe sur un capteur numérique, voire dans une voie de projection. On se reportera, à titre d'exemple, à la demande de brevet FR 2 964 756, intitulée «Système de visualisation à filtre de correction» qui décrit un système de ce type. La publication "Extending AMCW Lidar Depth-of-Field Using a Coded Aperture", par J.P. Godbaz, M.J. Cree et A. A. Dorrington, décrit un système de type Lidar comprenant un intensificateur de lumière et s'appuyant sur un codage de pupille pour étendre la profondeur de champ.

La publication "Improved night vision demonstrator program status" par T. L. Haran et al. décrit un système de vision de nuit, s'appuyant sur un codage de pupille prenant la forme d'un filtre de phase. Le coeur de l'invention est de mettre en oeuvre des filtres de phase dans la chaîne complexe d'un système de captation et de traitement d'images à bas niveau de lumière. Plus précisément, l'invention a pour objet un système de captation et de traitement d'images dites images initiales, ledit système comprenant au moins et dans cet ordre :

- Un objectif optique ;
- un intensificateur de lumière ;
- une optique-relais ;
- un capteur photosensible ;
- un traitement d'images en temps réel ;

caractérisé en ce que l'objectif optique comporte un premier filtre optique de phase et/ou d'amplitude et que l'image à traiter étant la somme du bruit du système et du quadruple produit de convolution des réponses percussionnelles de l'objectif optique, filtre optique inclus, par l'image initiale, de l'intensificateur de lumière, de l'optique-relais et du capteur photosensible, le traitement d'image consiste à appliquer un filtre numérique dont la première fonction est de réduire le bruit sur l'image à traiter et d'augmenter la profondeur de champ de l'objectif optique, ledit filtre numérique étant une fonction de la transformée de Fourier dudit quadruple produit de convolution desdites réponses percussionnelles de l'objectif optique, filtre optique inclus, de l'intensificateur de lumière, de l'optique-relais et du capteur photosensible; l'optique-relais comporte un second filtre de phase et/ou d'amplitude dont les fonctions sont de simplifier la combinaison optique de l'optique-relais et/ou de la rendre moins sensible aux erreurs de positionnement.

Avantageusement, le filtre de phase comprend également une fonction d'amplitude, c'est-à-dire que sa transmission est variable spatialement.

Avantageusement, la seconde fonction du filtre numérique est de corriger au moins une aberration géométrique de l'objectif optique

Avantageusement, l'aberration géométrique corrigée est le chromatisme latéral et/ou la distorsion.

Avantageusement, l'aberration géométrique corrigée est la courbure de champ et/ou l'astigmatisme et/ou la coma et/ou l'aberration sphérique et/ou le chromatisme axial.

Avantageusement, le filtre numérique est un filtre de Wiener.

Avantageusement, l'optique-relais est du type dioptrique.

Avantageusement, en accompagnement du filtre optique, le traitement numérique corrige les aberrations de l'optique-relais, telles que la défocalisation, la courbure, l'astigmatisme, la coma, l'aberration sphérique ou le chromatisme axial.

Avantageusement, le premier filtre optique est situé au voisinage de la pupille de l'objectif optique.

Avantageusement, le premier filtre optique est gravé sur une face d'un composant optique de l'objectif optique.

L'invention sera mieux comprise et d'autres avantages apparaîtront à la lecture de la description qui va suivre, donnée à titre non limitatif et grâce aux figures annexées parmi lesquelles :

La figure 1 déjà commentée représente un système de captation et de traitement d'images selon l'art antérieur ;
La figure 2 représente les parties optiques et optoélectroniques et les moyens de traitement d'un système de captation selon l'invention ;
La figure 3 représente une variante des parties optiques et optoélectroniques et les moyens de traitement d'un système de captation selon l'invention.

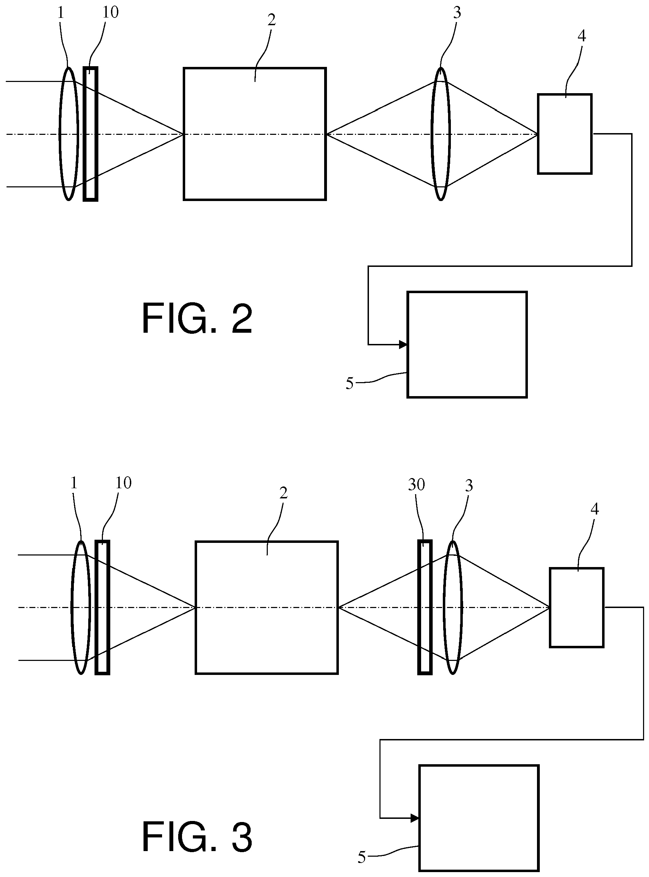

Le système de captation et de traitement d'images selon l'invention comporte, comme on le voit sur la figure 2 :

- Un objectif optique (1) ;
- un intensificateur de lumière (2) ;
- une optique-relais (3) ;
- un capteur photosensible (4) ;
- un traitement d'images en temps réel (5).

Ce système comporte deux caractéristiques nouvelles par rapport aux systèmes de même nature de l'art antérieur.

- L'objectif optique comporte un filtre optique (10) de phase et/ou d'amplitude ou un masque optique de phase et/ou d'amplitude situé au voisinage de sa pupille ;
- Le traitement numérique d'images est adapté en fonction dudit masque optique et de la signature de la chaîne d'imagerie complète comprenant les éléments 1, 2, 3 et 4.

Plusieurs types de filtres ou de masques de phase sont possibles, le plus simple étant constitué d'un saut de phase unique, proche de $\pi$ entre deux zones constituant une des surfaces du filtre. Le ratio entre les deux surfaces est optimisé pour obtenir le meilleur compromis possible entre le rapport signal à bruit ou S/B et la correction des défocalisations.

D'autres filtres plus complexes peuvent être mis en oeuvre et les géométries des masques décrites dans la littérature restent applicables à la correction des défocalisations et, de façon plus générale, à la correction des aberrations optiques du système selon l'invention. On trouvera les informations nécessaires dans la thèse de Frédéric Diaz intitulée « Système d'imagerie hybride par codage de pupille », Faculté des sciences d'Orsay-Université Paris Sud XI.

Ces filtres sont notamment mis en oeuvre pour la correction des aberrations d'astigmatisme et de courbure. En effet, les objectifs optiques ont généralement de grandes ouvertures, supérieures à 1.2 et de grands champs optiques qui peuvent dépasser 40 degrés. Dans ce cas, la correction de l'astigmatisme et de la courbure de champ devient cruciale. Or, classiquement, on corrige ces aberrations au moyen de ménisques épais ou de doublets optiques épais. L'utilisation de filtres de phase permet de compenser ces aberrations sans utiliser de telles optiques nécessairement lourdes et encombrantes.

Il est également possible de corriger les distorsions ou le chromatisme latéral quand le capteur est constitué de différents récepteurs monochromatiques ou d'une matrice avec un filtre de Bayer. Les distorsions et/ou le chromatisme latéral reviennent à une déformation de l'image d'amplitude variable dans le champ et le traitement d'image introduit un décalage opposé et compensatoire.

Les masques de phase peuvent être :

- des masques dits cubiques dont la fonction de phase $\Phi(x, y)$ dans un repère orthonormé (x, y) vaut : $\phi(x, y) = \alpha.(x^3 + y^3)$ ;
- des masques dits CPP pour « Constant Profil Path » ;
- Les masques dont la fonction de phase est une fonction trigonométrique ;
- des masques simplifiés annulaires composés d'anneaux concentriques, chaque anneau introduisant une phase constante et différente selon l'anneau ;
- des masques dits polynomiaux, le filtre étant référencé dans un repère (x, y), la variation de phase du filtre de phase est un polynôme en x et en y. Lorsque le masque est à symétrie radiale, la variation de phase du filtre de phase est un polynôme en r, r représentant la distance au centre du filtre ;
- des masques asymétriques ;
- des masques dits semi-XXX dont la variation de phase $\Phi(x, y)$ du filtre de phase vérifie, le filtre étant référencé dans un repère (x, y) en coordonnées cartésiennes ou (r, $\theta$) en notations polaires :

$\phi(x,y,r)=\alpha.sign(x).r^{\beta}$ ou $\phi(x,y,r)=\alpha.sign(n.\theta).r^{\beta}$ pour les masques dits semi- circulaires, $\alpha$ et $\beta$ étant des constantes et la fonction sign(x) valant 1 lorsque x est positif et -1 lorsque x est négatif.

Le filtre de correction peut comporter également une fonction d'amplitude, c'est-à-dire qu'il comporte, outre la fonction de phase, des zones dont la transmission optique est variable.

Le filtre peut être réalisé de façon indépendante sur une lame mince de faible épaisseur. Il peut également être gravé sur la face d'une lentille, par exemple en même temps qu'une surface asphérique ou qu'un profil diffractif de compensation de chromatisme. On évite ainsi d'ajouter des composants optiques supplémentaires dans la combinaison optique de l'objectif optique. En complément du premier filtre optique on dispose, dans l'optique-relais, d'un second filtre optique de phase et/ou d'amplitude dont les fonctions sont de simplifier la combinaison optique de l'optique-relais et/ou de la rendre moins sensible aux erreurs de positionnement. De façon générale, une erreur de positionnement correspond à une erreur lors du montage réglage de l'équipement, ou une défocalisation induite par des variations de température ou de pression. Ce second filtre est noté (30) sur la figure 3. Dans les deux cas, l'adjonction d'un filtre de phase et/ou d'amplitude et de son traitement d'images permet de relâcher les exigences de positionnement du tube intensificateur et du capteur associé. On diminue également la sensibilité du système aux variations thermiques et aux variations de pression. On se reportera sur ces différents points aux publications intitulées : « Wavefront Coding for Athermalization of Infrared Imaging Systems », SPIE V.2 5612-30 et « Jointly optimized optical digital system » de la société CDM Optics.

L'espace des différentes images est référencé dans un plan (Y, Z) et on utilise les notations suivantes :

O(Y, Z)  Répartition spatiale des intensités dans l'image captée initiale

I(Y, Z)  Répartition spatiale des intensités dans l'image finale « brute »

$I_R$(Y, Z)  Répartition spatiale des intensités dans l'image finale traitée

N(Y, Z)  Répartition spatiale du bruit dans l'objet capté initial

D(Y, Z)  Réponse percussionnelle de l'ensemble objectif de focalisation-filtre optique de phase et/ou d'amplitude

D'(Y, Z)  Réponse percussionnelle du tube intensificateur

D"(Y, Z)  Réponse percussionnelle de l'optique de couplage, le filtre optique de phase et/ou d'amplitude étant incorporé dans l'optique de couplage

D"'(Y, Z)  Réponse percussionnelle du capteur matriciel

La relation générale qui lie la répartition spatiale des intensités dans l'image finale « brute » et la répartition spatiale des intensités dans l'image captée initiale est la suivante :

$$I(Y,Z) = D'''(Y,Z) \otimes D''(Y,Z) \otimes D'(Y,Z) \otimes D(Y,Z) \otimes O(Y,Z) + N(Y,Z)$$

On note cette relation « Equation 1 ».

C'est sur cette image brute I(Y, Z) que le traitement d'image s'applique. En référençant l'espace de Fourier dans un plan ($\mu$, v) et en notant :

o($\mu$, v)  Transformée de Fourier de O(Y, Z)

i($\mu$, v)  Transformée de Fourier de I(Y, Z)

$i_R$($\mu$, v)  Transformée de Fourier de $I_R$(Y, Z)

n($\mu$, v)  Transformée de Fourier de N(Y, Z) ou spectre de bruit

d($\mu$, v)  Transformée de Fourier de D(Y, Z)

d'($\mu$, v)  Transformée de Fourier de D'(Y, Z)

d"($\mu$, v)  Transformée de Fourier de D"(Y, Z)

d"'($\mu$, v)  Transformée de Fourier de D"'(Y, Z)

h($\mu$, v)  Filtre appliqué par les unités de traitement

On obtient, dans l'espace de Fourier, la relation suivante qui correspond à une multiplication des FTM de natures différentes:

$$i(\mu,v) = d'''(\mu,v) \times d''(\mu,v) \times d'(\mu,v) \times d(\mu,v) \times o(\mu,v) + n(\mu,v)$$

Equation que l'on note « Equation 2 » et qui correspond à la transformée de Fourier de l'équation 1. On peut encore écrire cette équation 2 sous la forme simplifiée :

$$i(\mu,v) = FTM(\mu,v) \times o(\mu,v) + n(\mu,v)$$

« FTM » signifie « Fonction de Transfert de Modulation ».

Le traitement d'image consiste à réaliser sur la transformée de Fourier $i(\mu, v)$ de $I(Y, Z)$ un filtrage noté $h(\mu, v)$ pour obtenir dans l'espace de Fourier

$$i_R(\mu,v) = h(\mu,v) \times i(\mu,v) = h(\mu,v) \times FTM(\mu,v) \times o(\mu,v) + h(\mu,v) \times n(\mu,v)$$

La relation qui lie $i_R(\mu, v)$ et l'image réelle $I_R(Y, Z)$ après traitement est classiquement :

$$I_R(Y,Z) = TF(i(\mu,v))$$

ou encore

$$I_R(Y,Z) = TF(h(\mu,v)) \otimes I(Y,Z)$$

A titre d'exemple, la fonction de filtrage peut prendre la forme d'un filtre de Wiener. L'expression générale de ce type de filtre numérique est la suivante :

$$h(\mu,v) = \frac{\overline{FTM(\mu,v)}}{|FTM(\mu,v)|^2 + \dfrac{n(\mu,v)}{o(\mu,v)}}$$

Ces différents traitements ne posent pas de difficultés de réalisation et peuvent être réalisés en temps réel par les outils de calcul numérique actuels.

**Revendications**

1. Système de captation et de traitement d'images dites images initiales, ledit système comprenant au moins et dans cet ordre :

   - Un objectif optique (1) ;
   - un intensificateur de lumière (2) ;
   - une optique-relais (3) ;
   - un capteur photosensible (4) ;
   - un traitement d'images en temps réel (5) ;

   **caractérisé en ce que** :

   l'objectif optique (1) comporte un premier filtre optique (10) de phase et/ou d'amplitude et que l'image à traiter étant la somme du bruit du système et du quadruple produit de convolution des réponses percussionnelles de l'objectif optique (1) par l'image initiale, de l'intensificateur de lumière (2), de l'optique-relais (3) et du capteur photosensible (4), le traitement d'image consiste à appliquer un filtre numérique dont la première fonction est de réduire le bruit sur l'image à traiter et d'augmenter la profondeur de champ de l'objectif optique, ledit filtre numérique étant une fonction de la transformée de Fourier dudit quadruple produit de convolution desdites réponses percussionnelles de l'objectif optique, de l'intensificateur de lumière (2), de l'optique-relais et du capteur photosensible (4) ;

l'optique-relais comporte un second filtre de phase et/ou d'amplitude (30) dont les fonctions sont de simplifier la combinaison optique de l'optique-relais et/ou de la rendre moins sensible aux erreurs de positionnement.

2. Système de captation et de traitement d'images selon la revendication 1, **caractérisé en ce que** la seconde fonction du filtre numérique est de corriger au moins une aberration géométrique de l'objectif optique.

3. Système de captation et de traitement d'images selon la revendication 2, **caractérisé en ce que** l'aberration géométrique corrigée est le chromatisme latéral et/ou la distorsion.

4. Système de captation et de traitement d'images selon la revendication 2, **caractérisé en ce que** l'aberration géométrique corrigée est la courbure de champ et/ou l'astigmatisme et/ou la coma et/ou l'aberration sphérique et/ou le chromatisme axial.

5. Système de captation et de traitement d'images selon l'une des revendications précédentes, **caractérisé en ce que** le filtre numérique est un filtre de Wiener.

6. Système de captation et de traitement d'images selon l'une des revendications précédentes, **caractérisé en ce que** l'optique-relais est du type dioptrique.

7. Système de captation et de traitement d'images selon la revendication 1, **caractérisé en ce que** le traitement numérique prend en compte le second filtre de phase et/ou d'amplitude.

8. Système de captation et de traitement d'images selon l'une des revendications précédentes, **caractérisé en ce que** le premier filtre de phase et/ou d'amplitude est situé au voisinage de la pupille de l'objectif optique.

9. Système de captation et de traitement d'images selon l'une des revendications précédentes, **caractérisé en ce que** le premier filtre de phase est gravé sur une face d'un composant optique de l'objectif optique.

**Patentansprüche**

1. System zum Erfassen und Verarbeiten von Bildern, Anfangsbilder genannt, wobei das System wenigstens Folgendes und in dieser Reihenfolge umfasst:

   - eine optische Linse (1);
   - einen Lichtverstärker (2);
   - eine Relaisoptik (3);
   - einen lichtempfindlichen Sensor (4);
   - eine Echtzeitbildverarbeitung (5);

   **dadurch gekennzeichnet, dass**:

   die optische Linse (1) ein erstes optisches Phasen- und/oder Amplitudenfilter (10) umfasst und dass, da das zu verarbeitende Bild die Summe aus dem Rauschen des Systems und dem vierfachen Faltungsprodukt der Impulsantworten der optischen Linse (1) durch das Anfangsbild, des Lichtverstärkers (2), der Relaisoptik (3) und des lichtempfindlichen Sensors (4) ist, die Bildverarbeitung im Anwenden eines digitalen Filters besteht, dessen erste Funktion darin besteht, Rauschen an dem zu verarbeitenden Bild zu reduzieren und die Feldtiefe der optischen Linse zu vergrößern, wobei das digitale Filter eine Funktion der Fourier-Transformation des vierfachen Faltungsprodukts der Impulsantworten der optischen Linse, des Lichtverstärkers (2), der Relaisoptik und des lichtempfindlichen Sensors (4) ist;

   die Relaisoptik ein zweites Phasen- und/oder Amplitudenfilter (30) umfasst, dessen Funktionen es sind, die optische Kombination der Relaisoptik zu vereinfachen und/oder sie weniger empfindlich für die Positionierungsfehler zu machen.

2. System zum Erfassen und Verarbeiten von Bildern nach Anspruch 1, **dadurch gekennzeichnet, dass** die zweite Funktion des digitalen Filters darin besteht, wenigstens eine geometrische Aberration der optischen Linse zu korrigieren.

3. System zum Erfassen und Verarbeiten von Bildern nach Anspruch 2, **dadurch gekennzeichnet, dass** die korrigierte geometrische Aberration lateraler Chromatismus und/oder Verzerrung ist.

4. System zum Erfassen und Verarbeiten von Bildern nach Anspruch 2, **dadurch gekennzeichnet, dass** die korrigierte geometrische Aberration Feldkrümmung und/oder Astigmatismus und/oder Koma und/oder sphärische Aberration und/oder axialer Chromatismus ist.

5. System zum Erfassen und Verarbeiten von Bildern nach einem der vorherigen Ansprüche, **dadurch gekennzeichnet, dass** das digitale Filter ein Wiener-Filter ist.

6. System zum Erfassen und Verarbeiten von Bildern nach einem der vorherigen Ansprüche, **dadurch gekennzeichnet, dass** die Relaisoptik vom dioptrischen Typ ist.

7. System zum Erfassen und Verarbeiten von Bildern nach Anspruch 1, **dadurch gekennzeichnet, dass** die digitale Verarbeitung das zweite Phasen- und/oder Amplitudenfilter berücksichtigt.

8. System zum Erfassen und Verarbeiten von Bildern nach einem der vorherigen Ansprüche, **dadurch gekennzeichnet, dass** sich das erste Phasen- und/oder Amplitudenfilter in der Nähe der Pupille der optischen Linse befindet.

9. System zum Erfassen und Verarbeiten von Bildern nach einem der vorherigen Ansprüche, **dadurch gekennzeichnet, dass** das erste Phasenfilter auf eine Fläche einer optischen Komponente der optischen Linse geätzt ist.

## Claims

1. A system for collecting and processing images, called initial images, said system comprising at least the following, and in this order:

   - an optical lens (1);
   - a light intensifier (2);
   - a relay optic (3);
   - a light-sensitive sensor (4);
   - real-time image processing (5);

   **characterised in that**:

   the optical lens (1) comprises a first phase and/or amplitude optical filter (10) and **in that**, with the image to be processed being the sum of the noise of the system and of the quadruple product of convolution of the pulse responses of the optical lens (1) by the initial image, of the light intensifier (2), of the relay optic (3) and of the light sensitive sensor (4), image processing involves applying a digital filter, the first function of which is to reduce the noise on the image to be processed and to increase the depth of field of the optical lens, said digital filter being a function of the Fourier transform of said quadruple product of convolution of said pulse responses of the optical lens, the light intensifier (2), the relay optic and the light sensitive sensor (4);
   the relay optic comprises a second phase and/or amplitude filter (30), the functions of which are to simplify the optical combination of the relay optic and/or to make it less sensitive to positioning errors.

2. The system for collecting and processing images as claimed in claim 1, **characterised in that** the second function of the digital filter is to correct at least one geometric aberration of the optical lens.

3. The system for collecting and processing images as claimed in claim 2, **characterised in that** the corrected geometric aberration is lateral chromatic aberration and/or distortion.

4. The system for collecting and processing images as claimed in claim 2, **characterised in that** the corrected geometric aberration is field curvature and/or astigmatism and/or coma and/or spherical aberration and/or axial chromatic aberration.

5. The system for collecting and processing images as claimed in any one of the preceding claims, **characterised in that** the digital filter is a Wiener filter.

6. The system for collecting and processing images as claimed in any one of the preceding claims, **characterised in that** the relay optic is of the dioptric type.

7. The system for collecting and processing images as claimed in claim 1, **characterised in that** the digital processing takes into account the second phase and/or amplitude filter.

8. The system for collecting and processing images as claimed in any one of the preceding claims, **characterised in that** the first phase and/or amplitude filter is located in the vicinity of the pupil of the optical lens.

9. The system for collecting and processing images as claimed in any one of the preceding claims, **characterised in that** the first phase filter is etched onto a face of an optical component of the optical lens.

# FIG. 1

FIG. 2

FIG. 3

## RÉFÉRENCES CITÉES DANS LA DESCRIPTION

**Documents brevets cités dans la description**

- CA 2157755
- GB 2317772 A
- FR 2858050
- US 20020030163 A
- WO 9506388 A
- US 20050162526 A
- US 6326604 B
- FR 2964756